# EUROPEAN PATENT APPLICATION

(11) **EP 3 848 819 A1**
(43) Date of publication of application: **14.07.2021**
(21) Application number: 21150567.2
(22) Date of filing: 07.01.2021
(51) Int. Cl.: G06F 16/78

(54) **METHOD AND APPARATUS FOR RETRIEVING VIDEO, DEVICE AND MEDIUM**

(30) Priority: 08.01.2020 CN 202010018056
(71) Applicant: BAIDU ONLINE NETWORK TECHNOLOGY (BEIJING) CO., LTD., Beijing 100085 (CN)
(72) Inventor: YANG, Yi, Beijing, 100085 (CN); LI, Yi, Beijing, 100085 (CN); WANG, Shujing, Beijing, 100085 (CN); LIU, Jie, Beijing, 100085 (CN); YU, Tan, Beijing, 100085 (CN); CHEN, Xiaodong, Beijing, 100085 (CN); LIU, Lin, Beijing, 100085 (CN); ZHU, Yanfeng, Beijing, 100085 (CN); LI, Ping, Beijing, 100085 (CN)
(74) Representative: Mewburn Ellis LLP

(57) **Abstract**

Embodiments of the present disclosure disclose a method and apparatus for retrieving a video, a device and a medium, and relate to the field of data processing technology, and particularly to the field of smart retrieval technology. A specific implementation includes: determining, according to a query text and a candidate video, a unified space feature of the query text and a unified space feature of the candidate video based on a conversion relationship between a text semantic space and a video semantic space; determining a similarity between the query text and the candidate video according to the unified space feature of the query text and the unified space feature of the candidate video; and selecting a target video from the candidate video according to the similarity, and using the target video as a query result. Embodiments of the present disclosure provide the method and apparatus for retrieving a video, the device and the medium, thus implementing the accurate retrieval for a video based on the query text.

## Description

### TECHNICAL FIELD

Embodiments of the present disclosure relate to the field of data processing technology, and particularly to the field of smart retrieval technology. Specifically, embodiments of the present disclosure provide a method and apparatus for retrieving a video, a device and a medium.

### BACKGROUND

With the massive growth of videos on the Internet, a video user often acquires interested video content by retrieving a video.

At present, a search engine mainly determines a target video by matching a query text and a video title.

However, the quality of the video title is not good, and the existing technology cannot realize the retrieval for key point information in the video, thus leading to the problem of low video retrieval accuracy.

### SUMMARY

Embodiments of the present disclosure provide a method and apparatus for retrieving a video, a device and a medium, to implement the accurate retrieval for a video based on a query text.

In a first aspect, an embodiment of the present disclosure provides a method for retrieving a video, the method including: determining, according to a query text and a candidate video, a unified space feature of the query text and a unified space feature of the candidate video based on a conversion relationship between a text semantic space and a video semantic space, and determining a similarity between the query text and the candidate video according to the unified space feature of the query text and the unified space feature of the candidate video; and selecting a target video from the candidate video according to the similarity, and using the target video as a query result.

According to an embodiment of the present disclosure, the unified space feature of the query text and the unified space feature of the candidate video are determined based on the conversion relationship between the text semantic space and the video semantic space and according to the query text and the candidate video. Since the accurate conversion between different semantic spaces may be performed on the query text and the candidate video based on the conversion relationship between the text semantic space and the video semantic space, the accurate determination for the unified space features may be implemented in an embodiment of the present disclosure. The accurate determination for the similarity between the query text and the candidate video may be implemented based on the accurately determined unified space features, thereby improving the accuracy of the retrieval of the target video.

Further, the determining, according to a query text and a candidate video, a unified space feature of the query text and a unified space feature of the candidate video based on a conversion relationship between a text semantic space and a video semantic space includes: determining a text space feature of the query text based on the text semantic space; determining a video space feature of the candidate video based on the video semantic space; and performing a space unification on the text space feature and the video space feature based on the conversion relationship between the text semantic space and the video semantic space to obtain the unified space features.

Based on the technical feature, in an embodiment of the present disclosure, the video space feature of the candidate video is determined based on the video semantic space, and the space unification is performed on the text space feature of the query text and the video space feature of the candidate video. The similarity between the query text and the candidate video is calculated based on the unified space features, and the target video is determined from the candidate video according to the calculated similarity. Thus, the retrieval for the video that is performed based on the video space feature is implemented. Since the video space features may accurately reflect the video content, the accurate retrieval for the video may be implemented in an embodiment of the present disclosure.

Further, the determining a video space feature of the candidate video based on the video semantic space includes: determining a target feature of a target entity in a candidate video frame; determining a dense feature of the candidate video according to appearance information of the target entity and the target feature; and combining at least one of position information of the target entity in the candidate video frame, an area of the target entity or an occurrence order of the candidate video frame, and the dense feature, to obtain the video space feature of the candidate video.

Based on the technical feature, in an embodiment of the present disclosure, the dense feature of the candidate video is determined according to the appearance information of the target entity in the candidate video frame and the target feature of the target entity, and at least one of the position information of the target entity in the candidate video frame, the area of the target entity or the occurrence order of the candidate video frame is combined with the dense feature, to obtain the video space feature of the candidate video. Thus, the extraction for the video space feature is implemented.

Since the video space feature is determined according to the appearance information of the target entity in the candidate video frame and the target feature of the target entity, the video space feature reflects the local key information of the video. Further, the accurate retrieval for the video may be implemented based on the local key information.

Further, the determining a target feature of a target entity in a candidate video frame includes: determining candidate features of the target entity in the candidate video frame; clustering the determined candidate features to associate the determined candidate features with the target entity; and determining the target feature of the target entity from the candidate features associated with the target entity based on confidence levels of the candidate features.

Based on the technical feature, in an embodiment of the present disclosure, the target feature of the target entity is determined from the candidate features associated with the target entity based on confidence levels of the candidate features, thus the accurate extraction of the target entity feature is implemented, and determination accuracy for the video space feature is further improved.

Further, the performing a space unification on the text space feature and the video space feature based on the conversion relationship between the text semantic space and the video semantic space to obtain the unified space features includes: projecting the text space feature to the video semantic space based on the conversion relationship between the text semantic space and the video semantic space; and/or projecting the video space feature to the text semantic space based on the conversion relationship between the text semantic space and the video semantic space.

Based on the technical feature, in an embodiment of the present disclosure, the text space feature is projected to the video semantic space, and/or the video space feature is projected to the text semantic space, thereby achieving the semantic space unification of the query text and the candidate video.

Further, the projecting the text space feature to the video semantic space based on the conversion relationship between the text semantic space and the video semantic space includes: calculating a semantic distribution of a query word in the query text under the video semantic space based on the conversion relationship between the text semantic space and the video semantic space and according to the text space feature and the video space feature.

Based on the technical feature, in an embodiment of the present disclosure, the semantic distribution of the query word in the query text under the video semantic space is calculated. Thus, the determination for the unified space feature of the query text is implemented.

Further, the calculating a semantic distribution of a query word in the query text under the video semantic space based on the conversion relationship between the text semantic space and the video semantic space and according to the text space feature and the video space feature includes: using the text space feature as an input feature, using the video space feature as an output feature, and inputting the input feature and the output feature into a pre-trained converter model, to output the semantic distribution of the query word in the query text under the video semantic space.

Based on the technical feature, in an embodiment of the present disclosure, mapping of the query word in the query text to the video semantic space is implemented through an encoding and decoding mechanism of a converter.

Further, the determining a similarity between the query text and the candidate video according to the unified space feature of the query text and the unified space feature of the candidate video includes: calculating word similarities between query words in the query text and the candidate video based on the unified space features; determining, according to degrees of importance of the query words in a retrieval input text, weights of the words; and performing a weighted summation on the word similarities according to the determined weights to obtain the similarity between the query text and the candidate video.

Based on the technical feature, in an embodiment of the present disclosure, the weights of the query words are determined according to the degrees of importance of the query words in the retrieval input text. The weighted summation is performed on the word similarities according to the determined weights to obtain the similarity between the query text and the candidate video, thus improving the accuracy of the determination for the similarity.

In a second aspect, an embodiment of the present disclosure provides an apparatus for retrieving a video, the apparatus including: a feature determining module, configured to determine, according to a query text and a candidate video, a unified space feature of the query text and a unified space feature of the candidate video based on a conversion relationship between a text semantic space and a video semantic space; a similarity determining module, configured to determine a similarity between the query text and the candidate video according to the unified space feature of the query text and the unified space feature of the candidate video; and a target video selecting module, configured to select a target video from the candidate video according to the similarity, and use the target video as a query result.

Further, the feature determining module includes: a text feature determining unit, configured to determine a text space feature of the query text based on the text semantic space; a video feature determining unit, configured to determine a video space feature of the candidate video based on the video semantic space; and a space unifying unit, configured to perform a space unification on the text space feature and the video space feature based on the conversion relationship between the text semantic space and the video semantic space to obtain the unified space features.

Further, the video feature determining unit includes: a target feature determining subunit, configured to determine a target feature of a target entity in a candidate video frame; a dense feature determining subunit, configured to determine a dense feature of the candidate video according to appearance information of the target entity and the target feature; and a video feature determining subunit, configured to combine at least one of position information of the target entity in the candidate video frame, an area of the target entity or an occurrence order of the candidate video frame and the dense feature, to obtain the video space feature of the candidate video.

Further, the target feature determining subunit is configured to: determine candidate features of the target entity in the candidate video frame; cluster the determined candidate features to associate the determined candidate features with the target entity; and determine the target feature of the target entity from the candidate features associated with the target entity based on confidence levels of the candidate features.

Further, the space unifying unit includes: a video space unifying subunit, configured to project the text space feature to the video semantic space based on the conversion relationship between the text semantic space and the video semantic space; and/or a text space unifying subunit, configured to project the video space feature to the text semantic space based on the conversion relationship between the text semantic space and the video semantic space.

Further, he video space unifying subunit is configured to: calculate a semantic distribution of a query word in the query text under the video semantic space based on the conversion relationship between the text semantic space and the video semantic space and according to the text space feature and the video space feature.

Further, the calculating the semantic distribution of the query word in the query text under the video semantic space based on the conversion relationship between the text semantic space and the video semantic space and according to the text space feature and the video space feature includes: using the text space feature as an input feature, using the video space feature as an output feature, and inputting the input feature and the output feature into a pre-trained converter model, to output the semantic distribution of the query word in the query text under the video semantic space.

Further, the similarity determining module includes: a word similarity unit, configured to calculate word similarities between query words in the query text and the candidate video based on the unified space features; a weight determining unit, configured to determine, according to degrees of importance of the query words in a retrieval input text, weights of the words; and a text similarity unit, configured to perform a weighted summation on the word similarities according to the determined weights to obtain the similarity between the query text and the candidate video.

In a third aspect, an embodiment of the present disclosure provides an electronic device, the electronic device including: at least one processor; and a storage device, communicatively connected with the at least one processor, where the storage device stores an instruction executable by the at least one processor, and the instruction is executed by the at least one processor, to cause the at least one processor to perform the method according to embodiments of the present disclosure.

In a fourth aspect, an embodiment of the present disclosure provides a non-transitory computer readable storage medium, storing a computer instruction, where the computer instruction is used to cause a computer to perform the method according to embodiments of the present disclosure.

### BRIEF DESCRIPTION OF THE DRAWINGS

Accompanying drawings are used for a better understanding of the scheme, and do not constitute a limitation to the present disclosure.
Fig. 1 is a flowchart of a method for retrieving a video according to a first embodiment of the present disclosure;
Fig. 2 is a flowchart of a method for retrieving a video according to a second embodiment of the present disclosure;
Fig. 3 is a flowchart of a method for retrieving a video according to a third embodiment of the present disclosure;
Fig. 4 is a flowchart of a determination for a video space feature according to a fourth embodiment of the present disclosure;
Fig. 5 is a schematic diagram of a multi-layer cross-unification of features according to the fourth embodiment of the present disclosure;
Fig. 6 is a schematic diagram of a calculation for a semantic correlation according to the fourth embodiment of the present disclosure;
Fig. 7 is a schematic structural diagram of an apparatus for retrieving a video according to a fifth embodiment of the present disclosure; and
Fig. 8 is a block diagram of an electronic device performing the method for retrieving a video according to embodiments of the present disclosure.

### DETAILED DESCRIPTION OF EMBODIMENTS

Example embodiments of the present disclosure are described below in combination with the accompanying drawings, and various details of embodiments of the present disclosure are included in the description to facilitate understanding, and should be considered as illustrative only. Accordingly, it should be recognized by one of the ordinary skilled in the art that various changes and modifications may be made to embodiments described herein without departing from the scope and spirit of the present disclosure. Also, for clarity and conciseness, descriptions for well-known functions and structures are omitted in the following description.

### First Embodiment

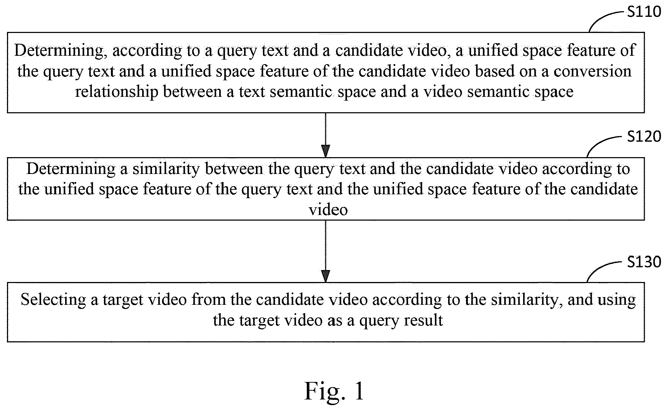

Fig. 1 is a flowchart of a method for retrieving a video according to a first embodiment of the present disclosure. This embodiment may be applicable to a situation where a video is retrieved based on a query text. The method may be performed by an apparatus for retrieving a video, and the apparatus may be implemented by means of software and/or hardware. Referring to Fig. 1, the method for retrieving a video according to an embodiment of the present disclosure includes following steps.

S110, determining, according to a query text and a candidate video, a unified space feature of the query text and a unified space feature of the candidate video based on a conversion relationship between a text semantic space and a video semantic space.

Here, the text semantic space refers to a semantic space to which a text belongs.

The video semantic space refers to a semantic space to which a video belongs.

The query text refers to a text inputted by a user and used for retrieving a video.

The candidate video refers to a to-be-retrieved video.

The unified space feature of the query text refers to a semantic feature of the query text in a unified semantic space.

The unified space feature of the candidate video refers to a semantic feature of the candidate video in a unified semantic space.

Alternatively, the unified semantic space may be a video semantic space or a text semantic space.

Specifically, the conversion relationship between the text semantic space and the video semantic space may be obtained by statisticizing the text and the video semantic space representation of the text, and/or by statisticizing the video and the text space representation of the video.

Alternatively, the conversion relationship between the text semantic space and the video semantic space may also be learned and obtained through a model.

S120, determining a similarity between the query text and the candidate video according to the unified space feature of the query text and the unified space feature of the candidate video.

Specifically, the similarity between the query text and the candidate video may be determined according to a unified space feature of the query text and a unified space feature of the candidate video under a single semantic space (a video semantic space or a text semantic space).

In order to improve the accuracy of the determination for the similarity, the similarity between the query text and the candidate video may also be determined according to a unified space feature of the query text and a unified space feature of the candidate video under two semantic spaces (the video semantic space and the text semantic space).

Specifically, determining the similarity between the query text and the candidate video according to the unified space feature of the query text and the unified space feature of the candidate video under the two semantic spaces includes: calculating a first similarity between the unified space feature of the query text and a video space feature with the video semantic space as a unified space, the video space feature referring to a unified space feature of the candidate video under the video semantic space; and calculating a second similarity between the unified space feature of the candidate video and a text space feature with the text semantic space as a unified space, to select a target video from the candidate video according to the first similarity and the second similarity, the text space feature referring to a unified space feature of the query text under the text semantic space.

S130, selecting a target video from the candidate video according to the similarity, and using the target video as a query result.

According to an embodiment of the present disclosure, the unified space feature of the query text and the unified space feature of the candidate video are determined based on the conversion relationship between the text semantic space and the video semantic space and according to the query text and the candidate video. Since the accurate conversion between different semantic spaces may be performed on the query text and the candidate video based on the conversion relationship between the text semantic space and the video semantic space, the accurate determination for the unified space features may be implemented in an embodiment of the present disclosure. The accurate determination for the similarity between the query text and the candidate video may be implemented based on the accurately determined unified space features, thereby improving the accuracy of the retrieval of the target video.

In order to further improve the accuracy of the determination for the similarity, the determining a similarity between the query text and the candidate video according to the unified space feature of the query text and the unified space feature of the candidate video includes: calculating word similarities between query words in the query text and the candidate video based on the unified space features; determining, according to degrees of importance of the query words in a retrieval input text, weights of the words; and performing a weighted summation on the word similarities according to the determined weights to obtain the similarity between the query text and the candidate video.

### Second Embodiment

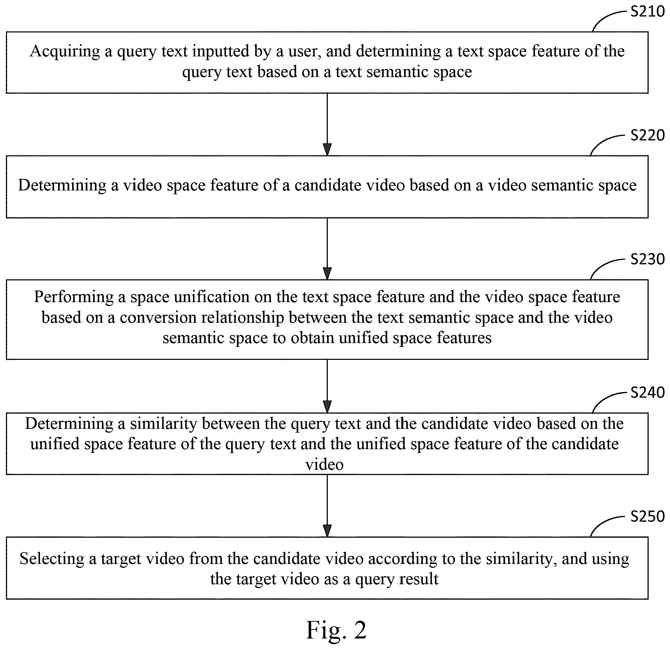

Fig. 2 is a flowchart of a method for retrieving a video according to a second embodiment of the present disclosure. This embodiment is an alternative scheme proposed on the basis of the above embodiment. Referring to Fig. 2, the method for retrieving a video according to an embodiment of the present disclosure includes following steps.

S210, acquiring a query text inputted by a user, and determining a text space feature of the query text based on a text semantic space.

Here, the text space feature of the query text refers to a feature of the query text in the text semantic space.

Alternatively, the extraction for the text space feature of the query text may be implemented based on any text feature extraction approach in the existing technology, to which no limitation is made in this embodiment.

Specifically, the determining a text space feature of the query text based on a text semantic space includes: performing word segmentation on the query text to obtain a query word; and determining a word vector of the query word, and performing a feature extraction on the word vector based on a pre-trained feature extraction model to generate the text space feature.

S220, determining a video space feature of a candidate video based on a video semantic space.

Here, the video space feature of the candidate video refers to a feature of the candidate video in the video semantic space.

Specifically, the determining a video space feature of a candidate video based on a video semantic space includes: performing entity recognition on a video image in the candidate video; and using a recognized entity feature vector as the video space feature of the candidate video.

S230, performing a space unification on the text space feature and the video space feature based on a conversion relationship between the text semantic space and the video semantic space to obtain unified space features.

Alternatively, the performing a space unification on the text space feature and the video space feature based on a conversion relationship between the text semantic space and the video semantic space to obtain unified space features includes: projecting the text space feature to the video semantic space based on the conversion relationship between the text semantic space and the video semantic space to generate a unified space feature of the query text; and/or projecting the video space feature to the text semantic space based on the conversion relationship between the text semantic space and the video semantic space to generate a unified space feature of the candidate video.

Specifically, the projecting the text space feature to the video semantic space based on the conversion relationship between the text semantic space and the video semantic space to generate a unified space feature of the query text includes: calculating a semantic distribution of the query word in the query text under the video semantic space based on the conversion relationship between the text semantic space and the video semantic space and according to the text space feature and the video space feature, and using the semantic distribution as the unified space feature of the query text.

Specifically, the calculating a semantic distribution of the query word in the query text under the video semantic space based on the conversion relationship between the text semantic space and the video semantic space and according to the text space feature and the video space feature includes: using the text space feature as an input feature, using the video space feature as an output feature, and inputting the input feature and the output feature into a pre-trained converter model, to output the semantic distribution of the query word in the query text under the video semantic space.

S240, determining a similarity between the query text and the candidate video based on the unified space feature of the query text and the unified space feature of the candidate video.

S250, selecting a target video from the candidate video according to the similarity, and using the target video as a query result.

According to embodiments of the present disclosure, the video space feature of the candidate video is determined based on the video semantic space, and the space unification is performed on the text space feature of the query text and the video space feature of the candidate video. The similarity between the query text and the candidate video is calculated based on the unified space features, and the target video is determined from the candidate video according to the calculated similarity. Thus, the retrieval for the video based on the video space feature is implemented. Since the video space feature may accurately reflect the video content, the accurate retrieval for the video may be implemented in an embodiment of the present disclosure.

### Third Embodiment

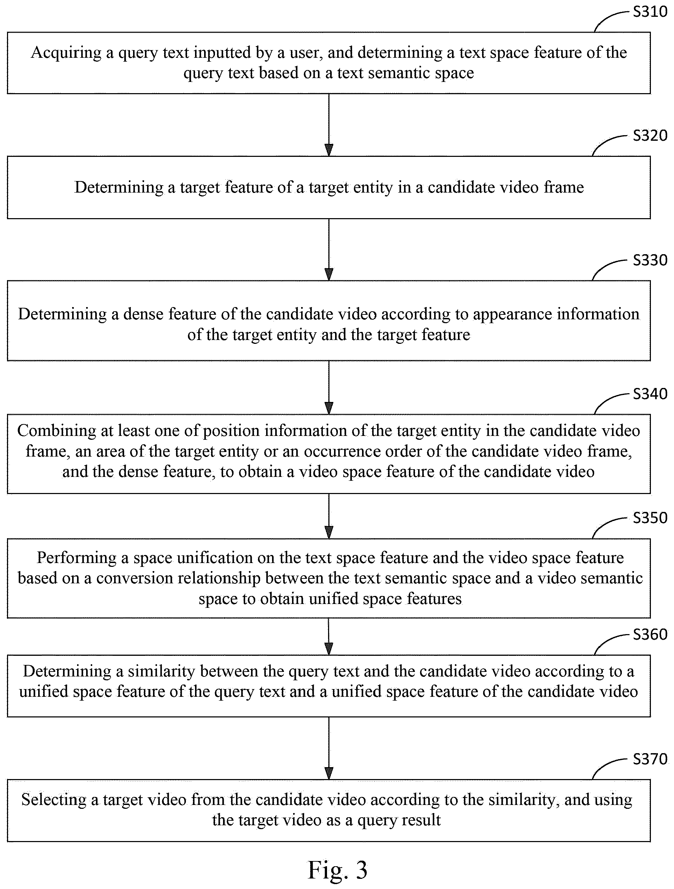

Fig. 3 is a flowchart of a method for retrieving a video according to a third embodiment of the present disclosure. This embodiment is an alternative scheme proposed on the basis of embodiments. Referring to Fig. 3, the method for retrieving a video according to an embodiment of the present disclosure includes following steps.

S310, acquiring a query text inputted by a user, and determining a text space feature of the query text based on a text semantic space.

S320, determining a target feature of a target entity in a candidate video frame.

Here, the candidate video frame refers to a video image in the candidate video.

The target entity refers to a key entity in the candidate video, and may be specifically set according to actual requirements.

The target feature is a feature representing the target entity.

Specifically, the determining a target feature of a target entity in a candidate video frame includes: determining candidate features of the target entity in the candidate video frame; clustering the determined candidate features to associate the determined candidate features with the target entity; and determining the target feature of the target entity from the candidate features associated with the target entity based on confidence levels of the candidate features.

For example, the determined target entity include a person, a horse, and an automobile. The process of determining the target feature of the target entity in the candidate video frame may be described as follows: performing a target entity detection on an image in the candidate video, and determining the candidate feature of the target entity according to an image region to which a detected target entity belongs; clustering all detected candidate features to obtain a candidate feature set of the target entity that is the person, a candidate feature set of the target entity that is the horse, and a candidate feature set of the target entity that is the automobile; and determining a target feature of the person from the candidate feature set of the person, a target feature of the horse from the candidate feature set of the horse, and a target feature of the automobile from the candidate feature set of the automobile, according to confidence levels of the candidate features.

S330, determining a dense feature of the candidate video according to appearance information of the target entity and the target feature.

Specifically, the determining a dense feature of the candidate video according to appearance information of the target entity and the target feature includes: determining, according to appearance information of the target entity in a single frame of image in the candidate video and the target feature, a sub-feature for the single frame of image; and combining determined sub-features according to occurrence orders of images, to obtain the dense feature of the candidate video.

Typically, the determining, according to appearance information of the target entity in a single frame of image in the candidate video and the target feature, a sub-feature for the single frame of image includes: for the target entity appearing in the single frame of image, filling in the target feature of the target entity at a corresponding position in the sub-feature of the single frame of image, and filling in a set feature at another position in the sub-feature.

Alternatively, the determining, according to appearance information of the target entity in a single frame of image in the candidate video and the target feature, a sub-feature for the single frame of image includes: using the target feature of the target entity appearing in the single frame of image as the sub-feature of the single frame of image.

S340, combining at least one of position information of the target entity in the candidate video frame, an area of the target entity or an occurrence order of the candidate video frame, and the dense feature, to obtain a video space feature of the candidate video.

S350, performing a space unification on the text space feature and the video space feature based on a conversion relationship between the text semantic space and a video semantic space to obtain unified space features.

S360, determining a similarity between the query text and the candidate video according to a unified space feature of the query text and a unified space feature of the candidate video.

S370, selecting a target video from the candidate video according to the similarity, and using the target video as a query result.

According to an embodiment of the present disclosure, the dense feature of the candidate video is determined according to the appearance information of the target entity in the candidate video frame and the target feature of the target entity, and at least one of the position information of the target entity in the candidate video frame, the area of the target entity or the occurrence order of the candidate video frame is combined with the dense feature, to obtain the video space feature of the candidate video. Thus, the extraction for the video space feature is implemented.

Since the video space feature is determined according to the appearance information of the target entity in the candidate video frame and the target feature of the target entity, the video space feature reflects the local key information of the video. Further, the accurate retrieval for the video may be implemented based on the local key information.

In order to further improve the accuracy of the determination for the video space feature, the candidate video frame is a key frame in the candidate video.

### Fourth Embodiment

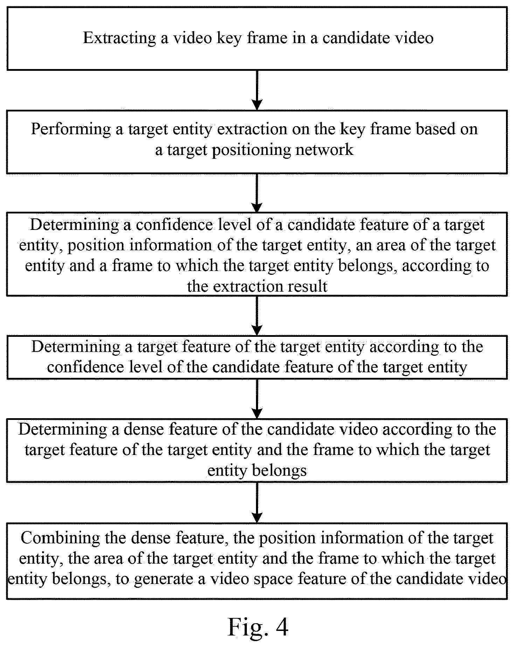

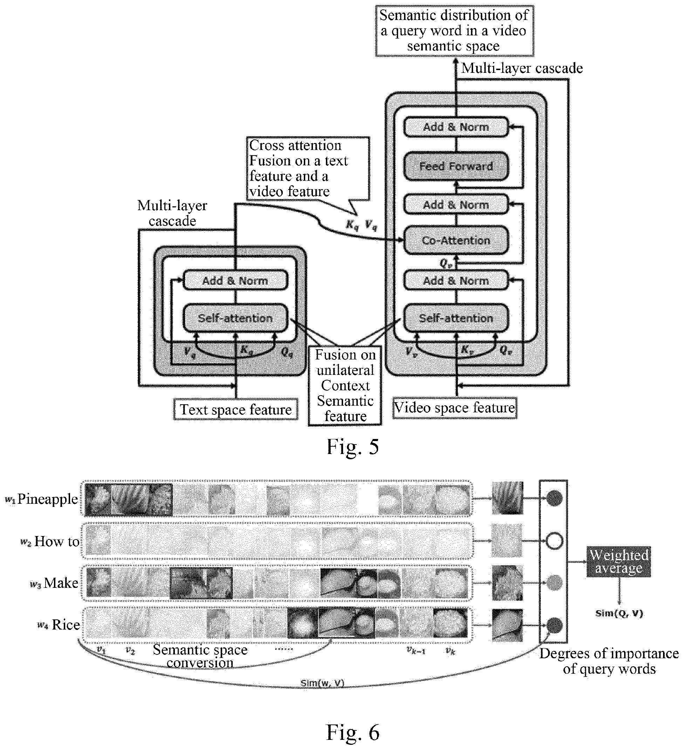

This embodiment is an alternative scheme proposed on the basis of embodiments. A method for retrieving a video according to this embodiment includes following steps.
1. A video space feature of a candidate video is determined.
   Referring to Fig. 4, a video key frame in the candidate video is extracted; a target entity extraction is performed on the key frame based on a target positioning network (faster rcnn); a confidence level of a candidate feature of a target entity, position information of the target entity, an area of the target entity and a frame to which the target entity belongs are determined according to the extraction result; a target feature of the target entity is determined according to the confidence level of the candidate feature of the target entity; a dense feature of the candidate video is determined according to the target feature of the target entity and the frame to which the target entity belongs; and the dense feature, the position information of the target entity, the area of the target entity and the frame to which the target entity belongs are combined to generate the video space feature of the candidate video.
2. A text space feature of a query text is determined.
3. Referring to Fig. 5, the text space feature and the video space feature are repeatedly crossed based on an attention mechanism, and related semantic features of the features under another semantic space are extracted respectively.
4. A semantic correlation between the query text and the candidate video and a semantic correlation between the candidate video and the query text are calculated at a word granularity, and a correlation fusion is performed at last, to determine the target video based on the fusion result.

Referring to Fig. 6, for example, "How to make rice with pineapple" is used as the query text. The calculation for the semantic correlation between the query text and the candidate video includes: calculating semantic distributions of query words (w₁, w₂, w₃, w₁₄) in the query text under the video semantic space (v₁...vₖ); determining similarities sim (w, v) between the query words and the candidate video according to the calculated semantic distributions; and performing a weighted average on the similarities between the query words and the candidate video according to degrees of importance of the query words in the query text to obtain a similarity between the query text and the candidate video.

An embodiment of the present disclosure proposes an entirely new video feature extraction technique for retrieval. Meanwhile, in the calculation for the text feature and the video semantic feature, the idea of multi-layer cross-alignment of features is introduced, and thus, the problem of the retrieval for a short video in practical problems is solved. At the same time, the technique may also achieve good results in image retrieval, and thus, the method has good mobility.

### Fifth Embodiment

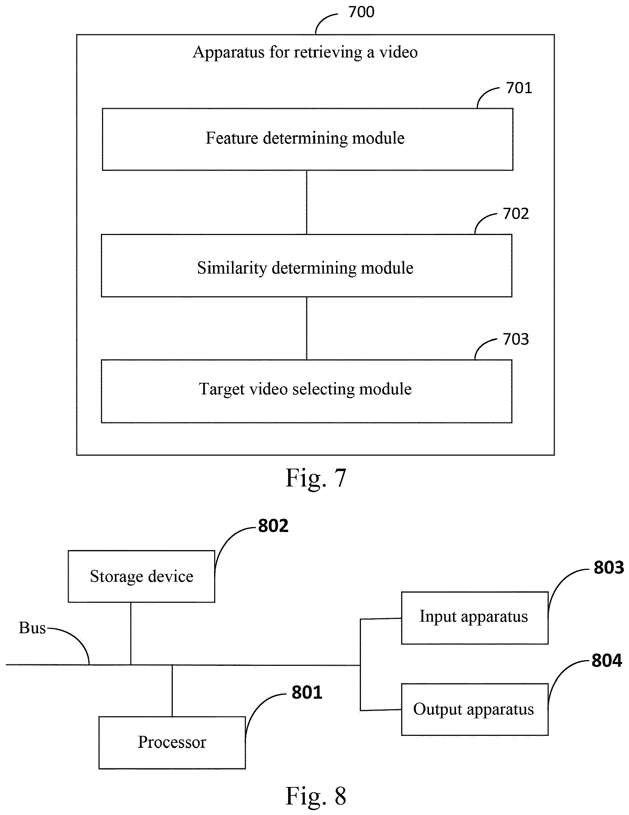

Fig. 7 is a schematic structural diagram of an apparatus for retrieving a video according to a fifth embodiment of the present disclosure. Referring to Fig. 7, the apparatus 700 for retrieving a video according to an embodiment of the present disclosure includes a feature determining module 701, a similarity determining module 702 and a target video selecting module 703.

Here, the feature determining module 701 is configured to determine, according to a query text and a candidate video, a unified space feature of the query text and a unified space feature of the candidate video based on a conversion relationship between a text semantic space and a video semantic space.

The similarity determining module 702 is configured to determine a similarity between the query text and the candidate video according to the unified space feature of the query text and the unified space feature of the candidate video.

The target video selecting module 703 is configured to select a target video from the candidate video according to the similarity, and use the target video as a query result.

According to an embodiment of the present disclosure, the unified space feature of the query text and the unified space feature of the candidate video are determined based on the conversion relationship between the text semantic space and the video semantic space and according to the query text and the candidate video. Since the accurate conversion between different semantic spaces may be performed on the query text and the candidate video based on the conversion relationship between the text semantic space and the video semantic space, the accurate determination for the unified space features may be implemented in an embodiment of the present disclosure. The accurate determination for the similarity between the query text and the candidate video may be implemented based on the accurately determined unified space features, thereby improving the accuracy of the retrieval of the target video.

Further, the feature determining module includes: a text feature determining unit, configured to determine a text space feature of the query text based on the text semantic space; a video feature determining unit, configured to determine a video space feature of the candidate video based on the video semantic space; and a space unifying unit, configured to perform a space unification on the text space feature and the video space feature based on the conversion relationship between the text semantic space and the video semantic space to obtain the unified space features.

Further, the video feature determining unit includes: a target feature determining subunit, configured to determine a target feature of a target entity in a candidate video frame; a dense feature determining subunit, configured to determine a dense feature of the candidate video according to appearance information of the target entity and the target feature; and a video feature determining subunit, configured to combine at least one of position information of the target entity in the candidate video frame, an area of the target entity or an occurrence order of the candidate video frame and the dense feature, to obtain the video space feature of the candidate video.

Further, the target feature determining subunit is configured to: determine candidate features of the target entity in the candidate video frame; cluster the determined candidate features to associate the determined candidate features with the target entity; and determine the target feature of the target entity from the candidate features associated with the target entity based on confidence levels of the candidate features.

Further, the space unifying unit includes: a video space unifying subunit, configured to project the text space feature to the video semantic space based on the conversion relationship between the text semantic space and the video semantic space; and/or a text space unifying subunit, configured to project the video space feature to the text semantic space based on the conversion relationship between the text semantic space and the video semantic space.

Further, the video space unifying subunit is configured to: calculate a semantic distribution of a query word in the query text under the video semantic space based on the conversion relationship between the text semantic space and the video semantic space and according to the text space feature and the video space feature.

Further, the calculating the semantic distribution of the query word in the query text under the video semantic space based on the conversion relationship between the text semantic space and the video semantic space and according to the text space feature and the video space feature includes: using the text space feature as an input feature, using the video space feature as an output feature, and inputting the input feature and the output feature into a pre-trained converter model, to output the semantic distribution of the query word in the query text under the video semantic space.

Further, the similarity determining module includes: a word similarity unit, configured to calculate word similarities between query words in the query text and the candidate video based on the unified space features; a weight determining unit, configured to determine, according to degrees of importance of the query words in a retrieval input text, weights of the words; and a text similarity unit, configured to perform a weighted summation on the word similarities according to the determined weights to obtain the similarity between the query text and the candidate video.

### Sixth Embodiment

According to an embodiment of the present disclosure, the present disclosure further provides an electronic device and a readable storage medium.

As shown in Fig. 8, Fig. 8 is a block diagram of an electronic device performing a method for retrieving a video according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 8, the electronic device includes one or more processors 801, a storage device 802, and an interface for connecting the components, the interface including a high speed interface and a low speed interface. The components are interconnected using different buses, and may be mounted on a common motherboard or in other ways as needed. The processors may process an instruction executed within the electronic device, the instruction including an instruction stored in the storage device or on the storage device to display graphical information of a GUI on an external input/output apparatus such as a display device coupled to the interface. In other implementations, a plurality of processors and/or a plurality of buses may be used, if desired, along with a plurality of storage devices. Also, a plurality of electronic devices may be connected, and each device provides a portion of necessary operations (e.g., as a server array, a group of blade servers or a multi-processor system). In Fig. 8, one processor 801 is taken as an example.

The storage device 802 is a non-transitory computer readable storage medium according to the present disclosure. Here, the storage device stores an instruction executable by at least one processor, to cause the at least one processor to perform the method for retrieving a video according to the present disclosure. The non-transitory computer readable storage medium in the present disclosure stores a computer instruction, the computer instruction being used to cause a computer to perform the method for retrieving a video according to the present disclosure.

As the non-transitory computer readable storage medium, the storage device 802 may be used to store a non-transitory software program, a non-transitory computer executable program and a module such as a program instruction/module (e.g., the feature determining module 701, the similarity determining module 702 and the target video selecting module 703 shown in Fig. 7) corresponding to the method for retrieving a video in embodiments of the present disclosure. The processor 801 executes various functional applications and data processing of the server by running the non-transitory software program, the instruction and the module stored in the storage device 802, i.e., implements the method for retrieving a video in embodiments of the method.

The storage device 802 may include a storage program area and a storage data area. Here, the storage program area may store an operating system and an application program required for at least one function. The storage data area may store data, etc. created according to the use of the electronic device of retrieving a video. In addition, the storage device 802 may include a high speed random access memory, and may also include a non-transitory storage device, for example, at least one magnetic disk storage device, a flash storage device, or other non-transitory solid state storage devices. In some embodiments, the storage device 802 may alternatively include a storage device disposed remotely relative to the processor 801. The remote storage device may be connected to the electronic device of retrieving a video, via a network. Examples of such network include, but not limited to, the Internet, an enterprise intranet, a block chain network, a local area network, a mobile communication network, and a combination thereof.

The electronic device of the method for retrieving a video may further include: an input apparatus 803 and an output apparatus 804. The processor 801, the storage device 802, the input apparatus 803 and the output apparatus 804 may be connected via a bus or in other ways. In Fig. 8, the connection via a bus is taken as an example.

The input apparatus 803 may receive an inputted number or inputted character information, and generate a key signal input related to the user setting and functional control of the electronic device of retrieving a video. For example, the input apparatus is a touch screen, a keypad, a mouse, a track pad, a touch pad, a pointing stick, one or more mouse buttons, a track ball, a joystick, or the like. The output apparatus 804 may include a display device, an auxiliary lighting apparatus (e.g., an LED), a tactile feedback apparatus (e.g., a vibration motor), etc. The display device may include, but not limited to, a liquid crystal display (LCD), a light emitting diode (LED) display, and a plasma display. In some embodiments, the display device may be a touch screen.

According to an embodiment of the present disclosure, the present disclosure further provides a computer program product including a computer program, where the computer program, when executed by a processor, implements the method for retrieving a video.

Various implementations of the systems and techniques described herein may be implemented in a digital electronic circuit system, an integrated circuit system, an application specific integrated circuit (ASIC), computer hardware, firmware, software, and/or combinations thereof. These various implementations may include the implementation in one or more computer programs. The one or more computer programs may be executed and/or interpreted on a programmable system including at least one programmable processor, and the programmable processor may be a dedicated or general-purpose programmable processor, may receive data and instructions from a storage system, at least one input apparatus and at least one output apparatus, and transmit the data and the instructions to the storage system, the at least one input apparatus and the at least one output apparatus.

These computing programs, also referred to as programs, software, software applications or codes, include a machine instruction of the programmable processor, and may be implemented using a high-level procedural and/or an object-oriented programming language, and/or an assembly/machine language. As used herein, the terms "machine readable medium" and "computer readable medium" refer to any computer program product, device and/or apparatus (e.g., a magnetic disk, an optical disk, a storage device and a programmable logic device (PLD)) used to provide a machine instruction and/or data to the programmable processor, and include a machine readable medium that receives the machine instruction as a machine readable signal. The term "machine readable signal" refers to any signal used to provide the machine instruction and/or data to the programmable processor.

To provide an interaction with a user, the systems and techniques described here may be implemented on a computer having a display apparatus (e.g., a cathode ray tube (CRT)) or an LCD monitor) for displaying information to the user, and a keyboard and a pointing apparatus (e.g., a mouse or a track ball) by which the user may provide the input to the computer. Other kinds of apparatuses may also be used to provide the interaction with the user. For example, a feedback provided to the user may be any form of sensory feedback (e.g., a visual feedback, an auditory feedback, or a tactile feedback); and an input from the user may be received in any form, including acoustic, speech, or tactile input.

The systems and techniques described here may be implemented in a computing system (e.g., as a data server) that includes a backend part, implemented in a computing system (e.g., an application server) that includes a middleware part, implemented in a computing system (e.g., a user computer having a graphical user interface or a Web browser through which the user may interact with an implementation of the systems and techniques described here) that includes a frontend part, or implemented in a computing system that includes any combination of the backend part, the middleware part or the frontend part. The parts of the system may be interconnected by any form or medium of digital data communication (e.g., a communication network) . Examples of the communication network include a local area network (LAN), a wide area network (WAN) and the block chain network.

The computer system may include a client and a server. The client and the server are generally remote from each other and typically interact through the communication network. The relationship between the client and the server is generated through computer programs running on the respective computer and having a client-server relationship to each other.

It should be understood that the various forms of processes shown above may be used to resort, add or delete steps . For example, the steps described in the present disclosure may be performed in parallel, sequentially, or in a different order. As long as the desired result of the technical solution disclosed in the present disclosure can be achieved, no limitation is made herein.

Embodiments do not constitute a limitation to the scope of protection of the present disclosure. It should be appreciated by those skilled in the art that various modifications, combinations, sub-combinations and substitutions may be made depending on design requirements and other factors. Any modifications, equivalents and replacements, and improvements falling within the spirit and the principle of the present disclosure should be included within the scope of protection of the present disclosure.

## Claims

1. A method for retrieving a video, comprising:
determining (S110), according to a query text and a candidate video, a unified space feature of the query text and a unified space feature of the candidate video based on a conversion relationship between a text semantic space and a video semantic space, and determining (S120, S240, S360) a similarity between the query text and the candidate video according to the unified space feature of the query text and the unified space feature of the candidate video; and
selecting (S130, S250, S370) a target video from the candidate video according to the similarity, and using the target video as a query result.

2. The method according to claim 1, wherein the determining (S110), according to a query text and a candidate video, a unified space feature of the query text and a unified space feature of the candidate video based on a conversion relationship between a text semantic space and a video semantic space comprises:
determining (S210, S310) a text space feature of the query text based on the text semantic space;
determining (S220) a video space feature of the candidate video based on the video semantic space; and
performing (S230, S350) a space unification on the text space feature and the video space feature based on the conversion relationship between the text semantic space and the video semantic space to obtain the unified space features.

3. The method according to claim 2, wherein the determining (S220) a video space feature of the candidate video based on the video semantic space comprises:
determining (S320) a target feature of a target entity in a candidate video frame;
determining (S330) a dense feature of the candidate video according to appearance information of the target entity and the target feature; and
combining (S340) at least one of position information of the target entity in the candidate video frame, an area of the target entity or an occurrence order of the candidate video frame, and the dense feature, to obtain the video space feature of the candidate video.

4. The method according to claim 3, wherein the determining (S320) a target feature of a target entity in a candidate video frame comprises:
determining candidate features of the target entity in the candidate video frame;
clustering the determined candidate features to associate the determined candidate features with the target entity; and
determining the target feature of the target entity from the candidate features associated with the target entity based on confidence levels of the candidate features.

5. The method according to any one of claims 2-4, wherein the performing (S230, S350) a space unification on the text space feature and the video space feature based on the conversion relationship between the text semantic space and the video semantic space to obtain the unified space features comprises:
projecting the text space feature to the video semantic space based on the conversion relationship between the text semantic space and the video semantic space; and/or
projecting the video space feature to the text semantic space based on the conversion relationship between the text semantic space and the video semantic space.

6. The method according to claim 5, wherein the projecting the text space feature to the video semantic space based on the conversion relationship between the text semantic space and the video semantic space comprises:
calculating a semantic distribution of a query word in the query text under the video semantic space based on the conversion relationship between the text semantic space and the video semantic space and according to the text space feature and the video space feature.

7. The method according to claim 6, wherein the calculating a semantic distribution of a query word in the query text under the video semantic space based on the conversion relationship between the text semantic space and the video semantic space and according to the text space feature and the video space feature comprises:
using the text space feature as an input feature, using the video space feature as an output feature, and inputting the input feature and the output feature into a pre-trained converter model, to output the semantic distribution of the query word in the query text under the video semantic space.

8. The method according to any one of claims 1-7, wherein the determining (S120, S240, S360) a similarity between the query text and the candidate video according to the unified space feature of the query text and the unified space feature of the candidate video comprises:
calculating word similarities between query words in the query text and the candidate video based on the unified space features;
determining, according to degrees of importance of the query words in a retrieval input text, weights of the words; and
performing a weighted summation on the word similarities according to the determined weights to obtain the similarity between the query text and the candidate video.

9. An apparatus (700) for retrieving a video, comprising a plurality of modules (701, 702, 703) configured to implement the method according to any one of claims 1-8.

10. An electronic device, comprising:
at least one processor (801); and
a storage device (802), communicatively connected with the at least one processor (801),
wherein the storage device (802) stores an instruction executable by the at least one processor (801), and the instruction is executed by the at least one processor (801), to cause the at least one processor (801) to perform the method according to any one of claims 1-8.

11. A non-transitory computer readable storage medium (802), storing a computer instruction, wherein the computer instruction is used to cause a computer to perform the method according to any one of claims 1-8.

12. A computer program product comprising a computer program, the computer program, when executed by a processor (801), implementing the method according to any one of claims 1-8.
